# EUROPEAN PATENT APPLICATION

(11) **EP 4 648 201 A1**
(43) Date of publication of application: **12.11.2025**
(21) Application number: 25175102.0
(22) Date of filing: 08.05.2025
(51) Int. Cl.: H01M 50/30, B60L 58/24, H01M 10/625, H01M 10/63, H01M 10/651, A62C 3/07

(54) **BATTERY SYSTEMS AND METHODS**

(30) Priority: 10.05.2024 GB 202406557
(71) Applicant: Fortescue Zero Limited, Kidlington, England OX5 1GB (GB)
(72) Inventor: LUKEHURST, Ben, Warwick (GB); PAINTER, Alex, Oxford (GB)
(74) Representative: HGF

(57) **Abstract**

Aspects of the present invention relate to a battery enclosure gas management system. The battery enclosure gas management system comprises a gas displacer arranged to drive venting of gas that surrounds at least one of one or more battery cells in a battery enclosure. The venting is to outside of the battery enclosure via an exit vent of the battery enclosure. The gas displacer is selectively activatable to drive the venting.

## Description

### TECHNICAL FIELD

The present disclosure relates to battery systems and methods. Aspects of the invention relate to a battery enclosure gas management system, to a battery system, to a vehicle, to a method of managing battery enclosure gas, to a control system, to a method of controlling a battery enclosure gas management system, to a computer program, to a non-transitory computer readable storage medium and to a signal.

### BACKGROUND

When a cell in a battery overheats, it can enter thermal runaway and release gas in an off-gassing process. This leads to damage or destruction of the cell, the potential for a battery fire and the venting of gases to atmosphere from the sealed battery enclosure via a burst valve. The hot gases and/or fire can increase the temperature of other nearby cells, potentially leading to further thermal runaway events within those cells. This is known as thermal propagation. In order to combat the potential for thermal propagation, various approaches to suppression systems have been implemented. Insulation layers between cells are effective to a point, but in the enclosed environment of a sealed battery enclosure, may ultimately be overcome by heat generation. Other existing approaches, such as injection of water, Novec 1230, CO₂ or oil suffer from at least one of excessive system weight and/or space requirement and use of a so called 'forever chemical'.

It is an aim of the present invention to address one or more of the disadvantages associated with the prior art.

### SUMMARY OF THE INVENTION

According to a first aspect of the invention there is provided a battery enclosure gas management system comprising a gas displacer arranged to drive venting of gas that surrounds at least one of one or more battery cells in a battery enclosure, the venting being to outside of the battery enclosure via an exit vent of the battery enclosure and the gas displacer being selectively activatable to drive the venting.

It has been found that the enclosure plays a significant role in facilitating propagation of cell overheating and venting, by trapping hot gasses resulting from cell thermal runaway of a cell nearby to other cells. The invention may assist in more rapidly restoring a normal atmosphere within the enclosure, reducing the probability of propagation. By replacing the gas around a cell, the cell may be cooled and potentially therefore prevented from overheating. Where a cell has already entered thermal runaway and is off-gassing, the removal of the hot gasses generated from the enclosure may reduce the likelihood of the thermal runaway propagating to other cells.

The use of a forced/active venting system such as this may increase the rate at which hot gas is removed from the vicinity of one or more cells (e.g. by comparison with simple venting through a burst valve caused by pressure increase as a result of off-gassing).

The system can be activated for cooling as a preventative/precautionary measure. Additionally or alternatively, it can be activated shortly before or during a thermal runaway/off-gassing event, with a view to preventing propagation. Additionally or alternatively, it might function to mitigate non-availability/inactivation of another (e.g. primary) cooling system, for instance during transport.

The gas displacer may be powered to drive the venting by a pre-stored or instantaneous energy source. It may for instance be driven by pre-stored compressed air or by electrical power. This may for instance be contrasted with relying on ram air, which may be unreliably available.

In some embodiments, the gas displacer comprises at least one of a compressor and a store of compressed gas and is arranged to selectively deliver compressed gas from the at least one of the compressor and the store of compressed gas to be used in driving the venting.

The store may for instance be a gas cylinder. The compressor may be operated to charge (and/or re-charge as required for future operation) the store with compressed gas and/or to delivery compressed gas in a substantially instantaneous manner. The compressor may be provided for multiple purposes or, at least principally, for another purpose. It may for instance be primarily provided to fulfil one or more other functions on a vehicle (e.g. for air cooling of one or more electric motors). Alternatively, the store may be provided and there may be no compressor.

The store may be utilised initially to create adequate initial venting force to rapidly replace gasses around one or more cells. This may be advantageous, as the moments at and shortly after activation of the system may be the most important/time sensitive in achieving adequate cooling/venting to prevent/limit damage. Maintenance gas displacement (potentially at a slower rate) may be subsequently performed at least in part by the compressor (e.g. where the store is at least partially exhausted). Alternatively, such continued gas displacement may continue to be performed by the store as it is recharged by the compressor or the store alone if it has sufficient capacity. The compressed gas may be air, which may be ambient air which is compressed and/or stored.

In some embodiments, to drive the venting, the gas displacer is arranged to blow a venting gas into the battery enclosure via an inlet of the battery enclosure in order to drive at least some gas already in the battery enclosure out of the exit vent.

The gas displacer may for instance be a fan/blower and/or a source of compressed gas and/or a compressor arranged to compress gas for delivery to the battery enclosure. Venting gas delivered by the gas displacer may provide cooling and/or displace vent gasses from around a cell that has thermally run away or is in thermal runaway, thereby removing that hot gas and reducing the likelihood of propagation.

In some embodiments, the battery enclosure gas management system comprises a pre-cooler arranged to cool the venting gas before it is blown into the enclosure by the gas displacer.

This may be of assistance in cooling one or more of the battery cells, especially where the gas is ambient air and may therefore be warmer than desirable.

In some embodiments, the battery enclosure gas management system comprises a filter to filter the venting gas before it is blown into the enclosure by the gas displacer.

This may reduce the likelihood of dust and/or other contaminants entering the battery enclosure. It may therefore reduce or eliminate the need for maintenance resulting from activation of the gas displacer. This may permit its use as a preventative/precautionary measure without damaging the battery cells and/or battery enclosure.

The battery enclosure gas management system where the venting gas is air.

Indeed, the air may be atmospheric air. Air may be readily available from atmosphere and be capable of providing cooling and displacement of gas in the battery enclosure.

In some embodiments, to drive the venting, the gas displacer is arranged to suck at least some gas already in the battery enclosure out of the battery enclosure via the exit vent.

This may provide cooling and/or displace vent gases from around a cell that has thermally run away or is in thermal runaway, thereby removing that hot gas and reducing the likelihood of propagation. Use of sucking may be advantageous as it may mean that no additional gas or other substance enters the battery enclosure, thereby reducing the likelihood of contaminants entering the battery enclosure. Nonetheless, a sucking approach may be complemented with provision of an inlet (e.g. having a one-way valve allowing gas entry only into the battery enclosure) for the flow of gas (e.g. ambient air) into the battery enclosure during operation of the gas displacer. This may reduce the risk of the creation of a negative pressure inside the battery enclosure which might damage the system.

In some embodiments, the gas displacer comprises an gas amplifier arranged to drive the venting.

The gas displacer may comprise a source of compressed gas and/or a compressor arranged to compress gas for delivery to a compressed gas inlet of the gas amplifier, the delivered compressed gas being used to entrain at least some of the gas already in the battery enclosure in order to vent it. The use of a gas amplifier may be advantageous in that it may require a reduced supply of compressed air to vent a given quantity of gas already in the battery enclosure by comparison with alternatives. Alternatives to a gas amplifier are however possible when implementing a sucking based system (e.g. a fan or a blower).

In some embodiments, the battery enclosure gas management system comprises two instances of the gas displacer, comprising:
a first gas displacer arranged to blow a venting gas into the battery enclosure via an inlet of the battery enclosure in order to drive at least some gas already in the battery enclosure out of the exit vent; and
a second gas displacer arranged to suck at least some gas already in the enclosure out of the battery enclosure via the exit vent.

This approach might further accelerate the venting process.

In some embodiments, the battery enclosure gas management system comprises a monitoring system arranged to generate sensed data indicative of whether there is overheating of one or more of the battery cells.

The monitoring system might for instance comprise one or more sensors such as gas detection sensors (e.g. arranged to detect gasses released by cells of the relevant type in an off-gassing event), thermistors, thermocouples and/or voltage sensors (e.g. arranged to detect an unexpected voltage drop in the voltage delivered by the cells).

In some embodiments, the battery enclosure gas management system comprises a control system arranged to automatically activate the gas displacer to drive the venting in accordance with the sensed data from the monitoring system indicating overheating of one or more of the battery cells.

Automatic activation may be desirable as a failsafe in order to improve the probability of damage being prevented or reduced. It may also or alternatively be possible to manually activate the gas displacer. It may be for instance that a user might be provided with a facility to activate the gas displacer as a precaution or preventatively. Options for automatic and manual activation could be provided (e.g. with one serving as an override to the other or as simple alternative activation control mechanisms).

According to a second aspect of the invention, there is provided a battery system comprising one or more battery cells in a battery enclosure, an exit vent from the battery enclosure and a battery enclosure gas management system as described in the first aspect.

In some embodiments, the battery enclosure is sealed.

The exit vent may for instance be sealed with a 'burst valve' (which may actually be a spring loaded valve) providing communication with an environment external to the battery enclosure (thereby breaking the seal) only when venting is occurring. Similarly, where present, the inlet of the battery enclosure may also be sealed with a valve which opens only when gas is blown into the battery enclosure by the gas displacer.

In some embodiments, the one or more battery cells are rechargeable battery cells.

The one or more battery cells may for instance be lithium ion battery cells and/or may be cylindrical, pouch, or prismatic battery cells and/or may be formed into a battery pack.

In some embodiments, insulation is provided between the one or more battery cells and the exit vent.

This may serve to mitigate any failure of the remainder of the battery enclosure gas management system and/or its insufficiently fast activation and/or unfortunate positioning of a flame front that might otherwise risk giving rise to thermal propagation as hot gas travels to the exit vent. The insulation may for instance be provided in a layer over the top of the cells and/or may be located in inter-cell spaces.

According to a third aspect of the invention there is provided a vehicle comprising the battery system of the second aspect.

According to a fourth aspect of the invention, there is provided a method of managing battery enclosure gas comprising selectively driving venting of gas that surrounds at least one of one or more battery cells in a battery enclosure, the venting being to outside of the battery enclosure via an exit vent of the battery enclosure.

In some embodiments, the driving of the venting of the gas comprises blowing a venting gas into the battery enclosure via an inlet of the battery enclosure in order to drive at least some gas already in the battery enclosure out of the exit vent.

In some embodiments, the driving of the venting of the gas comprises sucking at least some gas already in the battery enclosure out of the battery enclosure via the exit vent.

According to a fifth aspect of the invention, there is provided a control system arranged to manage battery enclosure gas in a battery enclosure having one or more battery cells therein, the control system comprising one or more processors collectively configured to:
receive a signal indicative of data sensed by a monitoring system;
determine in dependence on the sensed data that there is overheating of at least one of the battery cells in the battery enclosure; and
output a signal that activates a gas displacer to drive venting of gas that surrounds at least one of the one or more battery cells, the venting being to outside of the battery enclosure via an exit vent of the battery enclosure.

According to a sixth aspect of the invention, there is provided a method of controlling a battery enclosure gas management system for a battery enclosure having one or more battery cells therein, the method comprising:
receiving a signal indicative of data sensed by a monitoring system;
determining in dependence on the sensed data that there is overheating of at least one of the battery cells in the battery enclosure; and
outputting a signal that activates a gas displacer to drive venting of gas that surrounds at least one of the one or more battery cells, the venting being to outside of the battery enclosure via an exit vent of the battery enclosure.

According to a seventh aspect of the invention, there is provided a computer program that, when read by a computer, causes performance of the method of the fourth aspect or the sixth aspect.

According to a eighth aspect of the invention, there is provided a non-transitory computer readable storage medium comprising computer readable instructions that, when read by a computer, cause performance of the method of the fourth aspect or the sixth aspect.

According to a ninth aspect of the invention, there is provided a signal comprising computer readable instructions that, when read by a computer, cause performance of the method of the fourth aspect or the sixth aspect.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a cut-away view of a battery system according to an embodiment of the invention;
Figure 2 shows a perspective view of a vehicle according to an embodiment of the invention;
Figure 3 shows a schematic view of a control system according to an embodiment of the invention;
Figures 4 shows a schematic view of a battery enclosure gas management system according to an embodiment of the invention;
Figures 5 shows a schematic view of a battery enclosure gas management system according to an embodiment of the invention;
Figure 6 shows a block diagram of a method according to an embodiment of the invention; and
Figure 7 shows a block diagram of a method according to an embodiment of the invention.

### DETAILED DESCRIPTION

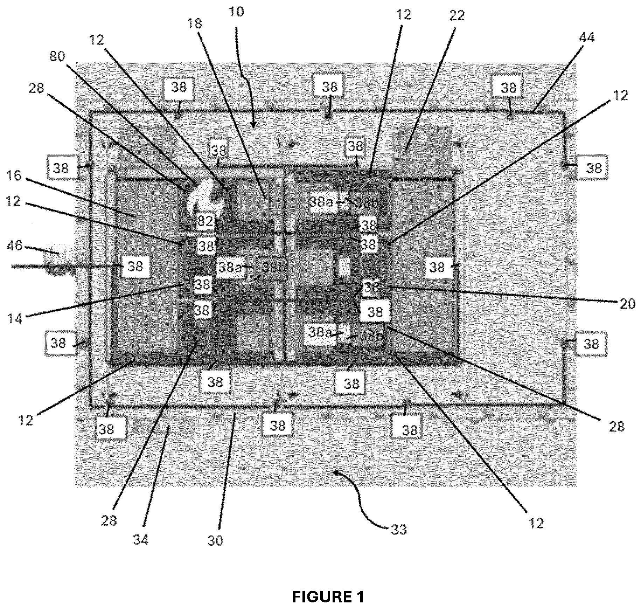

Referring first to Figure 1, a battery system is generally shown at 10. For ease of understanding the battery system 10 is described first, before descriptions of battery enclosure gas management systems, usable with the battery system 10, are provided.

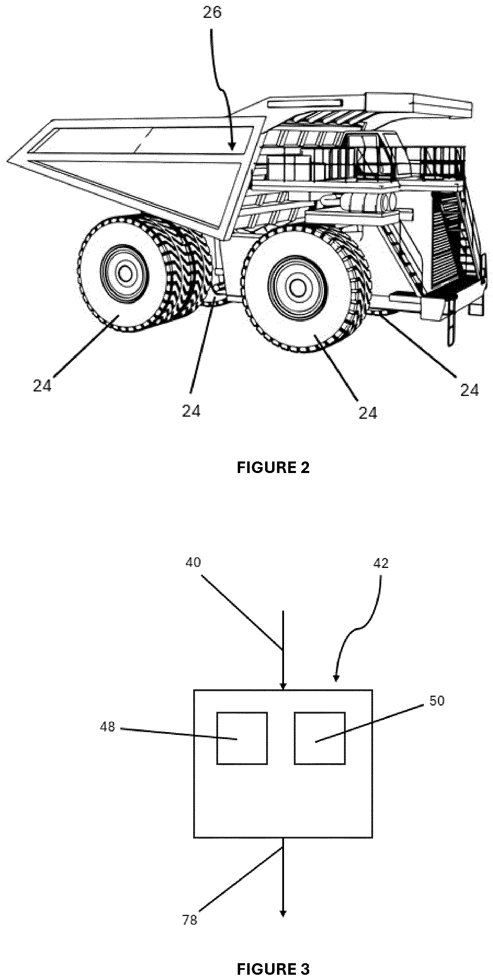

The battery system 10 has six battery cells 12 arranged in a tightly fitting pack. The battery cells 12 are rechargeable lithium-ion battery cells. As will be appreciated however, the number and type of battery cells could be adjusted. Each cell 12 has a positive and a negative terminal. The positive terminals of a first bank 14 of half of the cells 12 are connected in parallel by a positive connector 16. The negative terminals of the first bank 14 are connected in parallel by an intermediary connector 18. The intermediary connector 18 also connects in series the negative terminals of the first bank 14 to the positive terminals of a second bank 20 formed by the other half of the cells 12. The intermediary connector 18 also connects the positive terminals of the second bank 20 in parallel. The negative terminals of the second bank 20 are connected in parallel by a negative connector 22. The positive 16 and negative 22 connectors electrically connect the cells 12 to an electrical load, in this case a motor arranged to drive wheels 24 of a haul truck 26 (shown in Figure 2).

Each of the cells 12 has an off-gassing disc 28, arranged to release hot gasses from the inside of the relevant cell 12 in the event of that cell undergoing thermal runaway.

The battery cells 12 are contained within a battery enclosure 30. The enclosure 30 provides a sealed chamber 32, sealing the battery cells 12 from a region 33 that is outside of the enclosure 30. The enclosure 30 has an exit vent 34 sealed by a spring loaded valve 36 (burst valve). The spring loaded valve is arranged to release (i.e. vent) a build-up of pressure in the sealed chamber 32 resulting from off-gassing of one or more of the cells 12.

Distributed about the sealed chamber 32 are a plurality of sensors 38 (in this case thermocouples) forming part of a monitoring system of a battery enclosure gas management system (discussed further below). The monitoring system is arranged to generate sensed data indicative of whether there is overheating of one or more of the cells 12. Some of the sensors 38 labelled 38a and 38b respectively are in pairs, one above and one below the intermediary connector 18 and substantially one above the other. The sensors 38 are connected to an input 40 (in this case an electrical input) of a control system 42 (shown in Figure 3) by respective signal wires in a wiring harness 44. The wiring harness 44 passes through the enclosure 30 via a gland fitting 46. In the control system 42, which in this embodiment is located outside of the enclosure 30, data generated by the sensors 38 and sent via electrical signals to the input 40, is stored in a memory 48 of the control system 42. The data in the memory 48 is accessed by a processor 50 of the control system 42, the processor 50 being electrically coupled to the memory 48. The processor 50 in this embodiment is an electronic processing device.

Although not shown, insulation may be provided at one or more locations within the enclosure 30, for instance over the top of the cells 12 with electrical connections between the positive connector 16, intermediary connector 18 and negative connector 22 and respective cell terminals passing through the insulation layer.

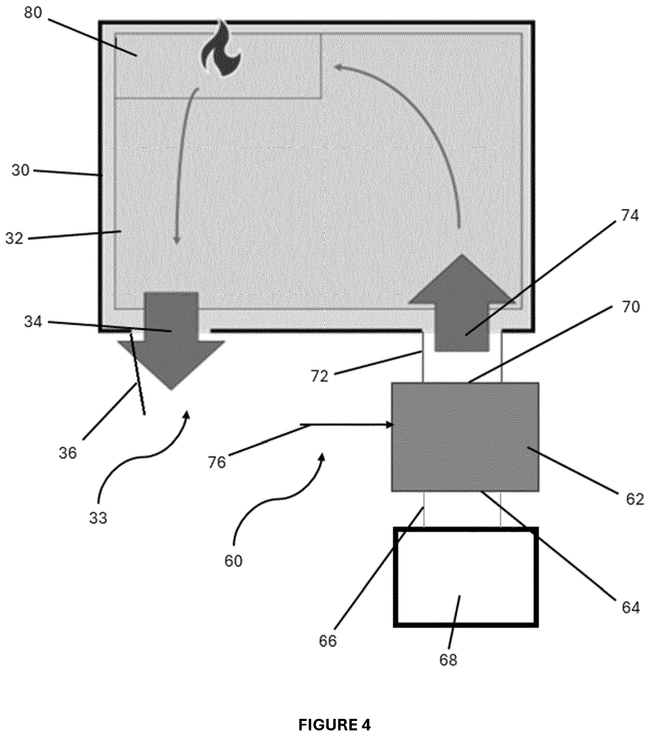

Referring now to Figure 4, a first embodiment of a battery enclosure gas management system, as used in combination with the battery system 10, is generally shown at 60. The system 60 has a gas displacer 62, which in this case is an electrically powered compressor. A gas intake 64 of the gas displacer 62 is connected by a first conduit 66 to a gas pre-cooling and filtration unit 68. The pre-cooling and filtration unit 68 has a refrigeration unit and associated heat exchanger as well as a gas filter. A compressed gas outlet 70 of the gas displacer 62 is connected by a second conduit 72, to an inlet 74 of the enclosure 30. The inlet 74 allows fluid communication into the sealed chamber 32 of the enclosure 30. The inlet 74 and outlet 70 are positioned in order to substantially avoid compressed gas, entering via the inlet, travelling directly to the outlet 70 without passing through the majority of the chamber 32. In a substantially cuboid enclosure, the inlet 74 and outlet 70 may for instance be located on a common wall of the enclosure 30 and may be spaced (e.g. at substantially opposite ends of that wall). Such arrangements may encourage circulation of compressed gas, entering the inlet 74, around substantially the whole of the chamber 32 before it can leave via the outlet 70.

The gas displacer 62 is electrically switched between activation and deactivation by an electrical control signal connection 76 with an output 78 of the control system 42.

In use, the system 60 is used to blow a venting gas (in this case air) into the enclosure 30 in order to drive at least some gas already in the enclosure 30, surrounding at least one or more of the cells 12, out of the exit vent 34. In order to do this, the gas displacer 62 is selectively activatable to drive the venting as described in greater detail below.

Taking for instance a scenario in which a damaged cell 80 of the cells 12 overheats and begins to off-gas, data from a local sensor 82 of the sensors 38 is indicative of the off-gassing occurring. This is recognised by the processor 50 through its analysis of data from the local sensor 82 sent via electrical signals to the input 40. In response, the processor 50 sends a control signal via the output 78 and control signal connection 76 to the gas displacer 62, thereby instigating activation of the gas displacer 62.

When the gas displacer 62 is running, atmospheric air (which in this case serves as the venting gas), enters the gas pre-cooling and filtration unit 68, sucked by the gas displacer 62. There, the air is filtered by the filter, thereby removing contaminants such as dust. Thereafter, the air is cooled from its atmospheric temperature through thermal exchange in the heat exchanger with a working fluid cooled by the refrigeration circuit. The air then passes to the gas displacer 62 via the first conduit 66, where it is compressed to produce compressed air. The compressed air is delivered in an instantaneous and continuous manner to the chamber 32 via the second conduit 72 and the inlet 74 of the enclosure 30. Inside the chamber 32, the compressed air provides a rapid cooling function (especially in view of the preceding action of the heat exchanger). Additionally, The compressed air causes a rapid displacement of gas (in this case air and off-gassing products from the damaged cell 80) and increase in pressure in the chamber 32. The increase in pressure causes the spring loaded valve 36 to open and air and off-gassing products to be expelled outside of the chamber 32 through the exit vent 34 of the enclosure 30.

In this way, the hot off-gassing products may be rapidly removed from the chamber 32 and replaced with relatively cool air. Consequently, the risk of thermal propagation to other of the cells 12, may be reduced. Further, because the compressed air entering the chamber 32 is filtered before it enters, it may be that little or no damage is caused by the use of the system 60. Continued use and/or reduced repair/maintenance requirements may therefore be achieved.

Where, as a consequence of the use of the system 60, data from the sensors 38 indicate acceptable and/or nominal temperature inside the chamber 32, the processor 50, determining this, sends a control signal via the output 78 and control signal connection 76 to the gas displacer 62, thereby deactivating the gas displacer 62.

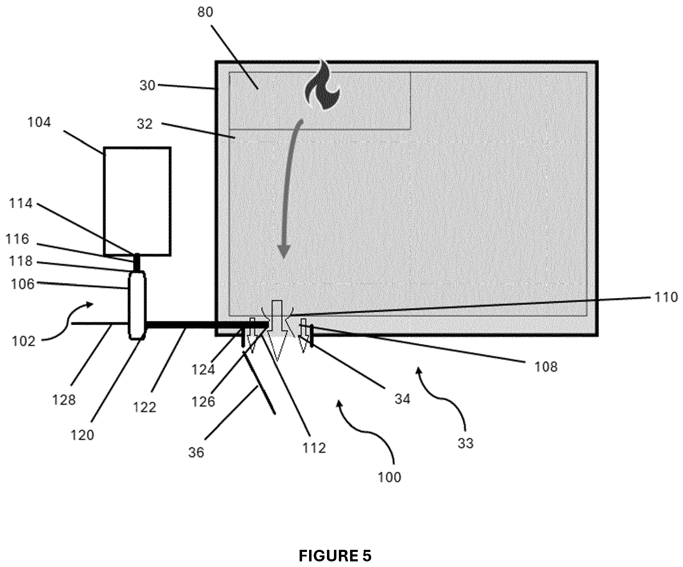

Referring now to Figure 5 a second embodiment of a battery enclosure gas management system, as used in combination with the battery system 10, is generally shown at 100.

The system 100 is similar to the system 60, but rather than achieves driven venting of gas surrounding the cells 12 using a blowing methodology (as in the case of system 60), system 100 uses a suction methodology.

The system 100 has a gas displacer 102, which in this case is a combination of an electrically powered compressor 104, a store of compressed gas 106 (in this case a gas cylinder) and a gas amplifier 108. The gas amplifier 108 is provided in the exit vent 34 of the enclosure 30 and is oriented to draw gas out of the chamber 32 via the exit vent 34 when operating. Consequently, a converging nozzle 110 of the gas amplifier 108 faces the chamber 32, whilst a diverging nozzle 112 of the gas amplifier 108 faces the region 33 outside of the enclosure 30. As will be appreciated, the diverging nozzle 112 is connected in series with and downstream of the converging nozzle 110.

An exhaust outlet 114 of the compressor 104 is connected by a first conduit 116 to a charging inlet 118 of the gas cylinder 106. A valve operated discharge outlet 120 of the gas cylinder 106 is connected by a second conduit 122 to a compressed gas inlet 124 of the gas amplifier 108. The compressed gas inlet 124 of the gas amplifier 108 is in fluid communication with an injector 126 in the diverging nozzle 112.

The valve operated discharge outlet 120 is switched between open and closed configurations by an electrical control signal connection 128 with the output 78 of the control system 42.

In use, the system 100 is used to blow a venting gas (in this case air) into the gas amplifier in order to suck at least some gas already in the enclosure 30, surrounding at least one or more of the cells 12, out of the exit vent 34. In order to do this, the gas displacer 102 is selectively activatable to drive the venting as described in greater detail below.

Taking for instance a scenario in which a damaged cell 80 of the cells 12 overheats and begins to off-gas, data from a local sensor 82 of the sensors 38 is indicative of the off-gassing occurring. This is recognised by the processor 50 through its analysis of data from the local sensor 82 sent via electrical signals to the input 40. In response, the processor 50 sends a control signal via the output 78 and control signal connection 76 to the valve operated discharge outlet 120 of the gas cylinder 106 thereby instigating activation of the gas displacer 102.

The control signal is sent to the valve operated discharge outlet 120 via the output 78 and electrical control signal connection 128. In consequence, the valve operated discharge outlet 120 opens, allowing compressed air stored in the gas cylinder 106 to be injected, under its own pressure, into the gas amplifier 108. The compressed air is delivered via the second conduit 122, compressed gas inlet 124 and injector 126. The compressed air stored in the gas cylinder 106 was previously pre-stored by operation of the compressor 104 to force atmospheric air into the gas cylinder 106. This charging occurs via the exhaust outlet 114 of the compressor 104, the first conduit 116 and the charging inlet 118. Because it is pre-charged, (e.g. before recognition of the occurrence of overheating and/or off-gassing by the processor 50) the gas cylinder 106 serves as a pre-stored energy source.

The compressed air injected into the gas amplifier 108 exits, at high speed, via the diverging nozzle 112 to the region 33 that is outside of the enclosure 30. In doing so, it entrains at least some of the gas already in the battery enclosure 30 (in this case air and off-gassing products from the damaged cell 80), thereby causing it to be vented via the gas amplifier 108. The use of the stored compressed air in the gas cylinder 106 may produce an enhanced initial venting rate (by comparison with, for instance, instantaneous use of air compressed by a compressor). In this way, the hot off-gassing products may be more rapidly removed from the chamber 32. The venting may reduce the risk of thermal propagation to other of the cells 12. Further, because no replacement air (or other gas) enters the chamber 32, the system 100 does not risk the introduction of contamination into the chamber 32. Nonetheless, in some embodiments, it may be that a separate inlet through the enclosure 30, which may have a one-way valve, is provided, in order to prevent the creation of a damaging level of negative pressure in the chamber 32 by the gas displacer 102. This inlet may for example allow atmospheric air into the chamber 32, should the negative pressure in the chamber 32 exceed a pre-defined level. It may also be that a filter and/or cooler is provided to pre-treat this atmospheric air before it enters the chamber 32.

Where, as a consequence of the use of the system 100, data from the sensors 38 indicate acceptable and/or nominal temperature inside the chamber 32, the processor 50, determining this, sends a control signal via the output 78 and electrical control signal connection 128 to the gas displacer 102, thereby closing the valve operated discharge outlet 120.

The compressor 104 is activated and deactivated with a view to reaching and maintaining a predetermined pressure in the gas cylinder 106 (when first charging it and/or replenishing it during and/or after discharge of the gas cylinder 106). This pressure is monitored by a pressure sensor in the gas cylinder 106, which outputs a signal indicative of the pressure. This signal may be sent to a controller, which may activate and/or deactivate the compressor accordingly. It may for instance be that the control system 42 performs this function, though alternatives are possible, e.g. a control system of the compressor 104 itself.

Battery enclosure gas management systems such as systems 60 and 100, may be sized to remove gas generated by one venting cell in time to prevent propagation. Thus for instance, it may be that gas displacer characteristics are selected to give performance in terms of gas volume per second/flow rate delivered, in proportion to the free volume in the chamber. The sizing might for instance result in removal of the gas generated by one venting cell within approximately 30 seconds of activation.

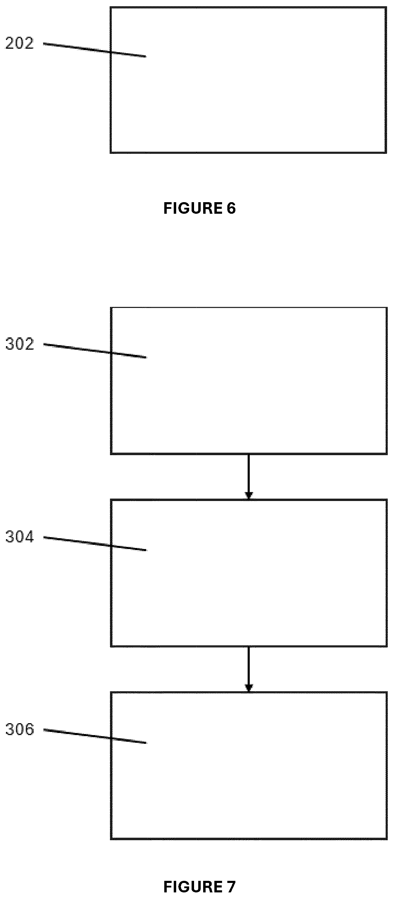

Figure 6 illustrates a method 200 according to an embodiment of the invention. The method 200 is a method of managing battery enclosure gas that surrounds at least one of one or more battery cells in a battery enclosure such as the enclosure 30. The method 200 may be performed by the system 60 of Figure 4 or the system 100 of Figure 5 optionally in combination with the control system 42 of Figure 3. The method has a step 202 of selectively driving venting of gas, the venting being to outside of the battery enclosure via an exit vent of the battery enclosure.

Figure 7 illustrates a method 300 according to an embodiment of the invention. The method 300 is a method of controlling a battery enclosure gas management system (such as the system 60 or the system 100) for a battery enclosure having one or more battery cells therein. The method 300 may be performed by the control system 42. In particular, the memory 48 may comprise computer-readable instructions which, when executed by the processor 50, perform of the method 300 according to an embodiment of the invention. The method 300 comprises steps of:
- Receiving 302 a signal indicative of data sensed by a monitoring system;
- Determining 304 in dependence on the sensed data that there is overheating of at least one of the battery cells in the battery enclosure; and
- outputting 306 a signal that activates a gas displacer to drive venting of gas that surrounds at least one of the one or more battery cells, the venting being to outside of the battery enclosure via an exit vent of the battery enclosure.

As will be appreciated, the various embodiments described above are intended as examples only. Adjustments or additions to the recited features are possible without departing from the scope of the invention. By way of example, in addition to or as an alternative to the automatic activation and deactivation of the gas displacer (as described with respect to systems 60 and 100 under the control of the control system 42), facility for manual activation and/or deactivation may be provided. By way of further example, insulation may be provided between the one or more battery cells (i.e. in inter-cell spaces) and/or in a layer over the top of the cells (in which case electrical connections to the cells may pass through the insulation). The control system may be arranged to be capable of controlling different types of battery enclosure gas management system (for instance systems 60 and 100) or may be bespoke/dedicated to control of a single type of battery enclosure gas management system. The battery enclosure gas management systems (such as the systems 60 and 100) may be arranged to be retrofitted to an existing battery system (such as the battery system 10) or may be arranged for building-in to a battery system (such as the battery system 10).

It will be appreciated that various changes and modifications can be made to the present invention without departing from the scope of the present application.

## Claims

1. A battery enclosure gas management system comprising a gas displacer arranged to drive venting of gas that surrounds at least one of one or more battery cells in a battery enclosure, the venting being to outside of the battery enclosure via an exit vent of the battery enclosure and the gas displacer being selectively activatable to drive the venting.

2. The battery enclosure gas management system of claim 1 where the gas displacer comprises a compressor and/or a store of compressed gas and is arranged to selectively deliver compressed gas from the compressor and/or the store of compressed gas to be used in driving the venting.

3. The battery enclosure gas management system according to claim 1 or claim 2 where to drive the venting, the gas displacer is arranged to blow a venting gas into the battery enclosure via an inlet of the battery enclosure in order to drive at least some gas already in the battery enclosure out of the exit vent.

4. The battery enclosure gas management system of claim 3 where the venting gas is air.

5. The battery enclosure gas management system of claim 1 or claim 2 where to drive the venting, the gas displacer is arranged to suck at least some gas already in the battery enclosure out of the battery enclosure via the exit vent.

6. The battery enclosure gas management system of claim 5 where the gas displacer comprises a gas amplifier arranged to drive the venting.

7. The battery enclosure gas management system according to any preceding claim comprising a monitoring system arranged to generate sensed data indicative of whether there is overheating of one or more of the battery cells.

8. A battery system comprising one or more battery cells in a battery enclosure, an exit vent from the battery enclosure and a battery enclosure gas management system according to any of claims 1 to 7.

9. The battery system according to claim8 where insulation is provided between the one or more battery cells and the exit vent.

10. A vehicle comprising the battery system according to claim8 or claim 9.

11. A method of managing battery enclosure gas comprising selectively driving venting of gas that surrounds at least one of one or more battery cells in a battery enclosure, the venting being to outside of the battery enclosure via an exit vent of the battery enclosure.

12. The method according to claim 11 where the driving of the venting of the gas comprises blowing a venting gas into the battery enclosure via an inlet of the battery enclosure in order to drive at least some gas already in the battery enclosure out of the exit vent.

13. The method of claim 11 where the driving of the venting of the gas comprises sucking at least some gas already in the battery enclosure out of the battery enclosure via the exit vent.

14. A control system arranged to manage battery enclosure gas in a battery enclosure having one or more battery cells therein, the control system comprising one or more processors collectively configured to:
receive a signal indicative of data sensed by a monitoring system;
determine in dependence on the sensed data that there is overheating of at least one of the battery cells in the battery enclosure; and
output a signal that activates a gas displacer to drive venting of gas that surrounds at least one of the one or more battery cells, the venting being to outside of the battery enclosure via an exit vent of the battery enclosure.

15. A computer program that, when read by a computer, causes performance of the method as claimed in claim 11 to 13.
